# EUROPÄISCHE PATENTSCHRIFT

(11) **EP 3 099 641 B1**
(45) Veröffentlichungstag und Bekanntmachung des Hinweises auf die Patenterteilung: **29.11.2017**
(21) Anmeldenummer: 14815709.2
(22) Anmeldetag: 18.12.2014
(51) Int. Cl.: C03C 8/20, C03C 3/091, C03C 3/093, C03C 8/02, C03C 8/14, C03C 17/04

(54) **MIT EINER GLASFLUSSBASIERTEN BESCHICHTUNG VERSEHENES SUBSTRAT, GLASFLUSSMATERIAL SOWIE VERFAHREN ZUR BESCHICHTUNG EINES GLAS- ODER GLASKERAMIKSUBSTRATS**
A SUBSTRATE PROVIDED WITH A COATING BASED ON A GLASS FLUX, GLASS FLUX MATERIAL, AND METHOD FOR COATING A GLASS OR GLASS CERAMIC SUBSTRATE
SUBSTRAT MUNI D'UN REVÊTEMENT BASÉ SUR UNE VITRIFICATION, MATÉRIAU DE VITRIFICATION ET PROCÉDÉ DE REVÊTEMENT D'UN SUBSTRAT EN VERRE OU EN VITROCÉRAMIQUE

(30) Priorität: 30.01.2014 DE 102014101140
(43) Veröffentlichungstag der Anmeldung: 07.12.2016
(73) Patentinhaber: Schott AG, 55122 Mainz (DE)
(72) Erfinder: MITRA, Ina, 55271 Stadecken-Elsheim (DE); BOCKMEYER, Matthias, 55116 Mainz (DE); SIEBERS, Friedrich, 55283 Nierstein (DE); JOEST, Ina, 55268 Nieder-Olm (DE); STORCH, Alexander, 31061 Alfeld (DE); SEYFAHRTH, Matthias, 07749 Jena (DE); SCHWALL, Michael, 55116 Mainz (DE)
(74) Vertreter: Blumbach Zinngrebe
(86) Internationale Anmeldenummer: PCT/EP2014/078448
(87) Internationale Veröffentlichungsnummer: WO 2015/113707

(56) Entgegenhaltungen:
- DE-A1- 19 834 801
- GB-A- 1 166 184
- GB-A- 2 301 100
- JP-A- H0 930 834
- SU-A1- 1 730 066
- US-A- 5 605 869
- US-A- 6 043 171

## Beschreibung

Die Erfindung betrifft ein Glasflussmaterial zum Aufbringen einer vorzugsweise blickdichten Beschichtung, ein Verfahren, bei welchem das Glasflussmaterial zum Aufbringen einer vorzugsweise blickdichten Beschichtung verwendet wird sowie ein mit einer glasflussbasierten Beschichtung versehenes Glas- oder Glaskeramiksubstrat.

Die Erfindung betrifft insbesondere die Beschichtung von hitzebeständigen Glas- und Glaskeramiksubstraten mit einer vorzugsweise blickdichten Beschichtung.

### Hintergrund der Erfindung

Zum Bereitstellen von wärmebeständigen transparenten Scheiben sowie anderen Produkten, wie beispielsweise Flaschen, Rohren und anderen Hohlkörpern, werden in der Regel Gläser mit niedrigen thermischen Ausdehnungskoeffizienten, insbesondere Borosilikatgläser und Aluminosilikatgläser verwendet.

Als Beispiele für Borosilikatgläser sind Borofloat33®, Borofloat40®, Fiolax®, Duran® oder Pyrex.
Kennzeichnend für Borosilikatgläser sind wesentliche Anteile von Kieselsäure (SiO₂) und Borsäure (B₂O₃> 8 %) als Glasbildner. Die Höhe des Borsäuregehaltes beeinflusst die Eigenschaften des Glases insbesondere dahingehend, dass neben den als hochresistent bekannten Arten (B₂O₃ bis maximal 13 %) auch solche stehen, die infolge andersartigen strukturellen Einbaus der Borsäure (B₂O₃-Gehalte > 15 %) nur noch geringe chemische Resistenz zeigen. Daher werden folgende Untergruppen unterschieden.

Borosilikatgläser erdalkalifrei :
Typisch sind B₂O₃-Gehalte von 12-13 % und SiO₂-Anteile> 80 %. Infolge hoher chemischer Beständigkeit und geringer Wärmeausdehnung sind diese Gläser besonders geeignet für chemisch-technische Apparate, Rohrleitungen und Laborgeräte.

Borosilikatgläser erdalkalihaltig:
Neben ca. 75 % SiO₂und 8-12 % B₂O₃ enthalten diese Gläser bis zu 5 % Erdalkalien und Aluminiumoxid. Diese Gläser haben einen höheren Wärmeausdehnungskoeffizienten, sind aber chemisch hochresistent.

Borosilikatgläser hochborsäurehaltig:
Gläser mit B₂O₃-Gehalten von 15-25 % bei 65-70 % SiO₂ sowie Alkalioxide und Aluminiumoxid. Diese Gläser sind niedrigerweichend bei geringer Wärmedehnung und eigenen sich zur Verschmelzanpassung an Metalle, insbesondere Wolfram-Molybdän. Weiter führen diese Gläser zu einer besonders guten elektrischen Isolation. Der erhöhte B₂O₃-Gehalt verringert allerdings die chemische Resistenz.
Insbesondere für hitzeresistente Scheiben für unterschiedliche Verwendungen können neben Borosilikatgläsern auch Glaskeramiken verwendet werden.

Für verschiedene Zwecke ist es erwünscht, das Glas- oder Glaskeramiksubstrat zumindest abschnittsweise mit einer Beschichtung zu versehen.

Insbesondere schwarze oder weiße Beschichtungen werden zur Ausgestaltung eines Rahmens oder zum Aufbringen von Beschriftungen verwendet.

Herkömmliche glasflussbasierte Beschichtungen eignen sich zumindest als Einschichtsystem zumeist nicht zum Aufbringen einer blickdichten Beschichtung auf Substraten mit niedrigen thermischen Ausdehnungskoeffizienten. Dies ist unter anderem darauf zurückzuführen, dass sich der thermische Ausdehnungskoeffizient eines mit dem Glasfluss aufgebrachten Emaille von dem Substrat derart unterscheidet, dass allenfalls dünne Schichten aufgebracht werden können. Es ist daher nicht möglich, die für eine blickdichte Beschichtung erforderlichen Schichtdicken zu erreichen.

Dies gilt insbesondere für bleioxidfreie Glasflussmaterialien. Ein solches Material ist beispielsweise in der DE 198 34 801 C2 (Schott Glas) beschrieben.

In der Offenlegungsschrift EP 0 518 610 B1 (Cookson Group) wird ebenfalls ein bleifreies Glasflussmaterial beschrieben. Ein derartiges Material hat allerdings eine recht hohe Erweichungstemperatur, so dass dessen Einbrand bei über 750 °C erfolgen muss. Diese Temperatur ist für hitzebeständige Gläser, wie für Borosilikatgläser, zu hoch. Um auf Bleioxide verzichten zu können, kann ein hoher Anteil an Bismutoxid verwendet werden. Dies steigert aber die Herstellungskosten.

In der JP 2012085752 A wird ein pharmazeutisches Verpackungsmittel bestehend aus einer Glasampulle beschrieben, die über eine Farbbeschichtung mit definierter Zusammensetzung verfügt. Die Zusammensetzung der Beschichtung enthält 0,5 - 30 Gew.% Al₂O₃, 3 - 25 Gew.% ZnO, 20 - 40 Gew.% SiO₂, 3 - 15 Gew.% B₂O₃, 1 - 5 Gew.% Na₂O, 0,5 - 5 Gew.% Li₂O, 3 - 10 Gew.% BaO, 10 - 25 Gew.% Bi₂O₃, sowie weitere Oxide zur Farbgebung. Aufgrund der vergleichsweise niedrigen SiO₂-Gehalte von 20 - 40 Gew.% bestehen Nachteile insbesondere hinsichtlich der Säurebeständigkeit.

Die Offenlegungsschrift DE 10 2011 089 045 A1 beschreibt eine Spritze aus Borosilikatglas mit einer die Oberflächenrauhigkeit erhöhenden Konusbeschichtung. Diese Schrift beschreibt zwei Glassysteme, die als Basis für geeignete Glasflussmaterialien zur Beschichtung dienen. Das erste ist das Bi₂O₃-B₂O₃-SiO₂-Glassystem: Dieses Glassystem enthält als Hauptbestandteil 40 - 65 Gew.% Bi₂O₃, 3 - 20 Gew.% B₂O₃ und 10 - 30 Gew.% SiO₂, die das Glasgerüst bilden. Die hohen Gehalte an Bi₂O₃ sind günstig zur Erniedrigung der Einbrenntemperatur, indem sie die Erweichungstemperatur E_{w} erniedrigen. Nachteilig sind die hohen Gehalte wegen einer Erhöhung des thermischen Ausdehnungskoeffizienten. Für die Beschichtung von Glas oder Glaskeramiksubstraten mit niedriger Ausdehnung ist dieses Glassystem daher nicht gut geeignet, weil es nur geringe Schichtdicken erlaubt und die Gefahr von Abplatzungen der Schicht besteht. Als zweites Glassystem wird das ZnO-B₂O₃-SiO₂-Glassystem beschrieben. Hauptbestandteile sind 15 - 48 Gew.% ZnO, 8 - 40 Gew.% B₂O₃ und 8 - 52 Gew.% SiO₂. Mit diesem Glassystem ist es möglich, vergleichsweise niedrige thermische Ausdehnungskoeffizienten von 5x10⁻⁶ /K, gemessen zwischen 20 und 300°C, zu erhalten. Der hohe Mindestgehalt an ZnO von 15 Gew.% ist jedoch nachteilig für die chemische Beständigkeit der erhaltenen Beschichtungen.

Schließlich besteht bei Glasflussmaterialien auch der Wunsch nach einer guten chemischen Beständigkeit, insbesondere gegenüber Säuren, Basen und alkoholischen Lösungsmitteln. Hinsichtlich der hydrolytischen Beständigkeit sind solche unter den Bedingungen der Autoklavierung oberhalb von 100°C von Bedeutung.

Weiter ist es wichtig, dass sich Glasflussmaterialien gut verarbeiten lassen. Insbesondere in dem Fall, dass Substrate nur abschnittsweise bedruckt werden, sind Sprühverfahren wenig geeignet. Das Glasflussmaterial muss mithin geeignet sein, um daraus eine druckfähige Paste, insbesondere eine siebdruckfähige Paste, herstellen zu können.

Alternativ wird zur Bereitstellung von blickdichten Beschichtungen auch auf organische sowie auf hybridpolymere Beschichtungsmaterialien (Sol-Gel) zurückgegriffen. Derartige organische Materialien sind meist aufwendig aufzubringen, müssen zur Bereitstellung einer blickdichten Beschichtung oft als Mehrschichtsysteme aufgebracht werden und weisen für viele Anwendungen nicht die notwendige mechanische Beständigkeit hinsichtlich Kratzfestigkeit sowie keine hinreichende thermische und/oder chemische Beständigkeit auf.

### Aufgabe der Erfindung

Der Erfindung liegt demgegenüber die Aufgabe zugrunde, ein bleifreies Glasflussmaterial für Substrate mit niedrigen thermischen Ausdehnungskoeffizienten bereitzustellen, welches vorzugsweise blickdichte, kratzbeständige und chemisch beständige Beschichtungen ermöglicht.

Es soll insbesondere eine Einschichtbeschichtung bereitgestellt werden, welche kostengünstig ist und welche sich bei einer Temperatur unter 750°C und insbesondere unter 700 °C einbrennen lässt. Bei Glassubstraten die beim Einbrand zur Verformung neigen, wie zum Beispiel Glasverpackungsmitteln mit dünner Glaswandstärke beträgt die Einbrandtemperatur bevorzugt unter 660°C.

### Zusammenfassung der Erfindung

Die Aufgabe der Erfindung wird bereits gelöst durch ein Glasflussmaterial zum Aufbringen einer blickdichten Beschichtung, nach Anspruch 7 durch ein Verfahren zur Beschichtung eines Glas- oder Glaskeramiksubstrats nach Anspruch 8 sowie durch ein mit einer glasflussbasierten Beschichtung versehenes Glas- oder Glaskeramiksubstrat nach Anspruch 1 und die in Anspruch 12 definierten Gegenstände, die das beanspruchte beschichtete Glas- oder Glaskeramiksubstrat umfassen. Bevorzugte Ausführungsformen und Weiterbildungen der Erfindung sind dem Gegenstand der Unteransprüche zu entnehmen.

Die Erfindung betrifft ein mit einer vorzugsweise blickdichten Beschichtung versehenes Glas- oder Glaskeramiksubstrat, welches mit einem Glasflussmaterial, also einem Emaille, beschichtet ist.

Das Glasflussmaterial ist insbesondere als Glasfritte mit zugesetzten Pigmenten, Pulver oder als Paste, insbesondere als druckfähige Paste, ausgebildet. Das Glasflussmaterial wird auch als Emaille bezeichnet. Das aufzuschmelzende Material umfasst insbesondere die gemahlenen Glasfritten.

Um eine druckfähige Paste herzustellen, wird die Glaskomponente vermahlen. Insbesondere wird die Glaskomponente derart vermahlen, dass diese eine Partikelgrößenverteilung mit d₅₀ zwischen 0,5 und 15µm, bevorzugt zwischen 1 und 5 µm, besonders bevorzugt zwischen 1,2 und 2,5 µm aufweist. Dies bedeutet, dass 50 % der Partikel eine unterhalb des Wertes d₅₀ und 50 % oberhalb des Wertes d₅₀ liegen.

Das so erhaltene Pulver wird mit Pigmenten vermischt und unter Zusatz von einem Siebdrucköl, insbesondere auf Fichtenölbasis, zu einer Siebdruckpaste verarbeitet. So kann beispielweise ein mit Lösungsmittel(n) und Additiv(en) versetztes acrylatbasiertes Siebdrucköl, dessen über die Zusammensetzung eingestellte Viskosität für Siebdruckverfahren geeignet ist, verwendet werden.

Um eine optimale Verarbeitbarkeit der Glasurrohstoffe zu gewährleisten, können je nach Beschichtungsmethode verschiedene Hilfsmittel, Additive, Lösungsmittel, Thixotropierungsmittel etc. zugegeben werden. Die notwendigen, meist organischen Zusatzstoffe verflüchtigen sich beim Einbrand.

Insbesondere Trübungseffekte werden beispielsweise durch Zugabe von sog. Füllstoffen wie z.B. ZrO₂, TiO₂, ZrSiO₄ usw. erreicht. Dabei ist zu beachten, dass mit der Zugabe weiterer Komponenten auch die Gebrauchseigenschaften der Glasur, angefangen z.B. vom Aufschmelz- und Reaktionsverhalten bis hin zur chemischen Beständigkeit und Festigkeit des dekorierten Trägers, verändert werden können.

Die Homogenisierung der Paste kann beispielsweise in einem Dreiwalzenstuhl durchgeführt werden.

Als Pigmente können handelsübliche kommerziell erhältliche Pigmente einzeln oder auch als Pigmentmischung verwendet werden, welche bereits als Pulver vorliegen.

Als Pigmente werden vorzugsweise Metalloxide verwendet. Dies können insbesondere sein: Cobalt-Oxide / -Spinelle, Cobalt-Aluminium-Spinelle, Cobalt-Titan-Spinelle, Cobalt-Chrom-Spinelle, Cobalt-Nickel-Mangan-Eisen-Chrom-Oxide /-Spinelle, Cobalt-Nickel-Zink-Titan-Aluminium-Oxide / - Spinelle, Eisen-Oxide, Eisen-Chrom-Oxide, Eisen-ManganOxid/-Spinelle, Eisen-Chrom-Zink-Titan-Oxid, Kupfer-Chrom-Spinelle, Nickel-Chrom-Antimon-Titan-Oxide, Titan-Oxide, Zirkon-Silizium-Eisen-Oxide /-Spinelle etc. Als Pigmente kommen auch alle denkbaren Absorptionspigmente in Betracht, insbesondere plättchen- oder stäbchenförmige Pigmente. Es werden insbesondere weiße oder schwarze Pigmente verwendet. Eine bevorzugte Ausführungsform der Erfindung betrifft mithin die Herstellung von Verbundmaterialien, welche mit einer blickdichten weißen oder schwarzen Beschichtung versehen sind.

Denkbar ist aber auch die Verwendung von farbigen Pigmenten und/oder von Effektpigmenten.

Der Pigmentgehalt liegt vorzugsweise, bezogen auf den Feststoffanteil, im Bereich von 10-60 Gewichts%, bevorzugt von 15-55 Gewichts%.

Im Falle einer druckfähigen Paste wird die Viskosität der Paste durch Zugabe eines Öls vorzugsweise auf einen Bereich zwischen 1 und 7 Pa·s eingestellt.

Wesentlich für das Glasflussmaterial ist die Zusammensetzung der Glaskomponente.

Es wird eine Glaskomponente verwendet, welche 58 bis 65 mol% Siliciumoxid, -bevorzugt mindestens 60 mol% Siliciumoxid, 2,5 bis 6 mol% Aluminiumoxid, 0,5 bis 2 mol% Bismutoxid, und 18 bis 25 mol% Boroxid aufweist.

Diese Zusammensetzungsangabe bezieht sich nicht auf das gesamte Glasflussmaterial, welches, wie vorstehend ausgeführt, darüber hinaus Pigmente und optional Substanzen zur Herstellung einer Paste enthält, sondern auf die verwendete Glaskomponente, welche vorzugsweise in Pulverform vorliegt und welche insbesondere aus einer Glasfritte hergestellt wird.

Weiter umfasst die Glaskomponente mindestens 2,5 mol% von mindestens einem Oxid der Oxide Lithiumoxid, Natriumoxid und Kaliumoxid, wobei das Verhältnis von Alkalioxiden zu Aluminiumoxid, also die Summe R₂O/Al₂O₃, kleiner als 6 ist. Vorzugsweise ist dieses Verhältnis kleiner als 4,5 und in einer weiteren bevorzugten Ausführung kleiner als 4 und insbesondere kleiner als 3,5. Vorzugsweise ist dieses Verhältnis größer als 1.

Bei einer bevorzugten Ausführungsform der Erfindung beträgt der Anteil an Bismutoxid unter 3,5, bevorzugt unter 3 und besonders bevorzugt unter 2 mol%.

Vorzugsweise liegt der Anteil an Lithiumoxid zwischen 0 und 15 mol%, der Anteil an Natriumoxid zwischen 0 und 12 mol% und der Anteil an Kaliumoxid zwischen 0 und 4 mol%. In einer bevorzugten Ausführungsform liegt der Anteil der Alkalioxide bei mindestens 6 mol%, besonders bevorzugt bei mindestens 8 mol%. Vorzugsweise liegt die Summe der Alkalioxide unter 18mol%, besonders bevorzugt unter 16 mol%.

Eine besonders bevorzugte Ausführungsvariante der Erfindung weist zwischen 60 und 65 mol% Siliciumoxid, zwischen 2,5 und 5 mol% Aluminiumoxid, zwischen 1,2 und 2 mol% Bismutoxid, zwischen 20 und 25 mol% Boroxid und zwischen 5 und 15 mol% Lithiumoxid auf, wobei das Verhältnis von Alkalioxiden zu Aluminiumoxid zwischen 1 und 3,5 beträgt.

Mit einem erfindungsgemäßen Glasflussmaterial lässt sich ein blickdichtes Emaille bereitstellen, welches eine Erweichungstemperatur Ew von weniger als 680 °C aufweist. Insbesondere konnten Erweichungstemperaturen von unter 650 °C erzielt werden.

Die Erweichungstemperatur wird auch als dilatometrischer Erweichungspunkt bezeichnet, bei welchem gilt lg (η) = 7,6. Dieser kann nach DIN ISO 7884-8 bestimmt werden.

Durch die Erfindung lässt sich auch bei Glas- oder Glaskeramiksubstraten mit einem thermischen Längenausdehnungskoeffizienten α (bei 20 °C bis 300°C) von bis zu 5,5 * 10⁻⁶/K, vorzugsweise weniger als 4,5 * 10⁻⁶/K, besonders bevorzugt von weniger als 3,5 * 10⁻⁶/K, eine Schichtdicke von über 4 µm, besonders bevorzugt über 5 µm erzielen. Die Schichtdicke ist bevorzugt bis zu 30 µm und insbesondere bis zu 10 µm dick.

Die thermische Längenausdehnung wird im Sinne der Erfindung gemittelt über einen Temperaturbereich zwischen 20 °C und 300 °C bestimmt. Die Bestimmung kann entsprechend der DIN ISO 7991 erfolgen.

Der thermische Längenausdehnungskoeffizient α des aufgeschmolzenen Glasflussmaterials beträgt weniger als 7 * 10⁻⁶/K, vorzugsweise weniger als 6 * 10⁻⁶/K und besonders weniger als 5,5 * 10⁻⁶/K.

Die Erfinder haben herausgefunden, dass innerhalb des vorstehend beschriebenen Glassystems folgende Gesetzmäßigkeiten gelten.

Siliciumoxid senkt den thermischen Ausdehnungskoeffizienten und erhöht die chemische Beständigkeit. Gleichzeit erhöht Siliciumoxid aber auch den Erweichungspunkt des Glases.

Aluminiumoxid wirkt sich positiv auf die chemische Beständigkeit aus, erhöht aber ebenfalls die Erweichungstemperatur.

Bismutoxid senkt die Erweichungstemperatur. Es hat sich aber herausgestellt, dass innerhalb vorstehend beschriebenen Glassystems bereits ein Bismutoxidanteil von weniger als 4 % ausreichend ist und dennoch Erweichungstemperaturen von unter 650 °C erreicht werden können.

Boroxid senkt den thermischen Ausdehnungskoeffizienten und erhöht möglicherweise, zumindest in geringem Maße, die chemische Beständigkeit. Weiter senkt Boroxid die Erweichungstemperatur. Höhere Gehalte als 27 mol% sind für die chemische Beständigkeit nachteilig.

Alkalioxide erhöhen den thermischen Längenausdehnungskoeffizienten, gehen aber mit einer reduzierten chemischen Beständigkeit einher. Weiter senken Alkalioxide die Erweichungstemperatur des Glases.

Es versteht sich, dass das erfindungsgemäße Glas noch andere Komponenten enthalten kann, insbesondere können, wie es bei einer Weiterbildung der Erfindung vorgesehen ist, bis zu 2 mol% Zirkonoxid und/oder Titanoxid hinzugefügt werden sowie bis zu jeweils 3 mol% Erdalkalioxide, insbesondere Magnesiumoxid, Calciumoxid, Bariumoxid oder Strontiumoxid und/oder bis zu 3 mol% Zinnoxid.

Zirkonoxid und Titanoxid wirken sich positiv auf die chemische Beständigkeit des Glases aus, gehen aber mit einer Erhöhung der Erweichungstemperatur einher. Diese Zusätze bieten sich insbesondere für die Verwendung des Glasflussmaterials als Beschichtungsmaterial für Glaskeramiken an, da das Glasflussmaterial auf einer Glaskeramik mit höherer Temperatur eingebrannt werden kann. Besonders geeignet hierfür ist Zirkonoxid. Über Erdalkalimetalle kann insbesondere das Viskositätsverhalten des Glasflussmaterials optional eingestellt werden.

Vorzugsweise haben weitere mögliche Bestandteile einen Anteil von weniger als 5 mol%.

Durch die Erfindung konnte erreicht werden, dass sich eine blickdichte Beschichtung auf einem Substrat mit einem thermischen Längenausdehnungskoeffizienten von weniger als 4,5 * 10⁻⁶/K, vorzugsweise weniger als 4 * 10-6/K, bei einer Temperatur von weniger als 750 °C einbrennen lässt. Das Material kann auf einfache Weise mittels eines Druckverfahrens, insbesondere mittels Siebdruck oder mittels Tampondruck, bei gebogenen Substraten aufgebracht werden. Auch andere Beschichtungsverfahren wie die über ein Rad das sich im Farbschlicker dreht, Stifte, Dispenser oder neuerdings Tintenstrahldruck sind mit entsprechend in der Viskosität angepassten Pasten oder Schlickern möglich.

Zum Aufbringen auf gebogene Substrate kann das Glasflussmaterial auch zu einem Abziehbild verarbeitet werden und anschließend als Abziehbild auf gebogene Substrate, insbesondere auf Flächen, Stäbe oder Rohre aufgebracht werden.

Weitere Anwendungen sind vorgespannte und nichtvorgespannte Gläser, insbesondere hitzebeständige Scheiben.

Dabei kommt einer glasflussbasierten Farbe zugute, dass diese auch thermische Verarbeitungsschritte des Substratglases verträgt. Je nach verwendetem Glas oder nach verwendeter Glaskeramik ist es auch denkbar, das Glasflussmaterial vor dem Biegen oder vor dem Keramisieren eines Substrats aufzubringen.

Eine weitere Anwendung ist die Verwendung auf mehrschichtigen Verbundglasscheiben.

Diese werden mittels polymerer Zwischenschichten zu einem Verbundmaterial laminiert.

Bei derartigen Verbundgläsern, insbesondere bei Panzerglasverbundscheiben, ist es auch denkbar, das Glasflussmaterial vor dem Laminieren aufzubringen. Dieses kann sogar zwischen zwei Schichten des Verbunds angeordnet sein, ohne in einem Laminierungsprozess beschädigt zu werden. Dabei kommt dem erfindungsgemäßen Glasflussmaterial die hohe mechanische Beständigkeit zugute.

Weiter ist das Beschichtungsmaterial besonders im Küchenbereich für Backöfen und Herde, für Kaminsichtscheiben und Feuerschutztüren geeignet, sowie für pharmazeutische Glasverpackungsmittel geeignet.

Die Erfindung betrifft des Weiteren ein mit einer glasflussbasierten Beschichtung versehenes Glas- oder Glaskeramiksubstrat, welches einen thermischen Längenausdehnungskoeffizienten α zwischen 20 °C und 300 °C von weniger als 5,5 * 10⁻⁶/K, vorzugsweise weniger als 4,5 und besonders bevorzugt weniger als 3,5 * 10⁻⁶/K aufweist, wobei die glasflussbasierte Beschichtung einen thermischen Längenausdehnungskoeffizienten α von weniger als 7 * 10⁻⁶/K, vorzugsweise von weniger als 5,5 * 10⁻⁶/K, aufweist und wobei die glasflussbasierte blickdichte Beschichtung im sichtbaren Wellenlängenbereich (von 380 bis 780 µm) eine Transmission von weniger als 1 %, vorzugsweise von weniger als 0,5 %, aufweist.

Die glasflussbasierte Beschichtung ist insbesondere als Einschichtbeschichtungsmaterial ausgebildet.

Durch die Erfindung konnten erstmals niedrig dehnende Gläser und Glaskeramiken mit einer blickdichten EmailleSchicht versehen werden, welche nicht zum Abplatzen neigt. Die glasflussbasierte Beschichtung weist vorzugsweise Pigmente in einem Volumenfüllgrad von 20 bis 60 %, besonders bevorzugt von 30 bis 50 %, auf.

Dieser Volumenfüllgrad bezieht sich auf die eingebrannte Beschichtung.

Es versteht sich, dass sich die Zusammensetzung der Glaskomponente in der eingebrannten Beschichtung von der Glaskomponente des Glasflussmaterials aufgrund von Verdampfungs- und/oder Diffusionsprozessen unterscheiden kann.

Durch die Erfindung lassen sich Einschicht-Emaille-Beschichtungen bereitstellen, welche, sofern sie als weiße oder schwarze Schicht ausgebildet ist, im L*a*b*-Farbraum einen L*-Wert von über 86 bzw. von unter 28 und bevorzugt von unter 27 aufweisen.

Der a*-Wert sowie der b*-Wert im L*a*b*-Farbraum liegen vorzugsweise bei unter 1, besonders bevorzugt bei unter 0,5.

Es lassen sich also sowohl weiße als auch schwarze Beschichtungen mit hoher Brillanz aufbringen.

Das mit der erfindungsgemäßen Beschichtung versehene Glaskeramiksubstrat besteht bei einer Ausführungsform der Erfindung aus einem kristallisierten Lithiumaluminiumsilikat-Glas. Dieses kann insbesondere als Kaminsichtscheibe verwendet werden. Bevorzugt ist eine Verwendung als Kaminofenscheibe mit einer blickdichten Beschichtung im Randbereich.

Das mit der erfindungsgemäßen Beschichtung versehene Glassubstrat findet bevorzugt Verwendung als Brandschutzglas, Backofensichtscheibe (insbesondere für Pyrolyseherde), Abdeckung für Beleuchtungen, als Sicherheitsglas, optional im Laminatverbund, insbesondere als schussfestes Panzerglas, für Einbauten oder Auskleidungen in Öfen und als pharmazeutisches Glasverpackungsmittel.

Vorzugsweise beträgt die Differenz der thermischen Ausdehnungskoeffizienten von der Glasfritte und dem beschichteten Glassubstrat weniger als 2, bevorzugt weniger als 1,5 und besonders bevorzugt weniger als 1 * 10⁻⁶/K.

Durch den geringen Unterschied in den thermischen Ausdehnungskoeffizienten wird eine gute Anpassung erreicht. Es sind hohe Schichtdicken oberhalb von ca. 7 bis 30 µm möglich, ohne dass es zu Abplatzungen oder Rissen in Folge unzulässig hoher Spannungen zwischen Beschichtung und Glassubstrat kommt. Durch die hohen Schichtdicken wird eine gute Farbsättigung und Blickdichtheit bzw. Opazität der Farben erreicht. Mit den handelsüblichen Dekorfarben für die Beschichtung von pharmazeutischen Verpackungsmitteln aus Glas sind dagegen nur geringere Schichtdicken erreichbar, da die thermischen Ausdehnungskoeffizienten hier bei Werten von ca. 6 x 10⁻⁶ /K und darüber liegen.

Eine Verwendung sind Glasbehälter für die Pharmazie. Pharmazeutische Verpackungsmittel, die mit der erfindungsgemäßen Beschichtung versehen sind, sind vorzugsweise Spritzen, Ampullen, Karpulen und Fläschchen. Ein Beispiel für solche Glassubstrate ist das Glas FIOLAX® der Firma SCHOTT, das es in zwei Ausführungen als FIOLAX® klar, Glas-Nr. 8412 der SCHOTT AG, und als FIOLAX® braun, Glas-Nr. 8414, gibt. Ersteres hat einen Ausdehnungskoeffizienten von 4,9 x 10⁻⁶ /K, das zweite einen solchen von 5,5 x 10⁻⁶ /K, gemessen zwischen 20 und 300°C. Die Beschichtung kann beispielweise dem Aufbringen von Markierungen oder Beschriftungen dienen.

Weitere Verwendungen basieren auf beschichteten ebenen oder gebogenen Scheiben aus Borosilkatglas. Ein Beispiel für ein solches Substrat aus Borosilikatglas ist das gefloatete BOROFLOAT® der Firma SCHOTT AG, das es in den Varianten BOROFLOAT® 3.3 und BOROFLOAT® 4.0 mit Ausdehnungskoeffizienten von 3,3 bzw. 4,0 x 10⁻⁶ /K, gemessen zwischen 20 und 300°C, gibt. Aus diesem beschichteten Substrat leitet sich eine bevorzugte Verwendung als Sicherheitsverglasung in einem Laminatverbund mit Polymerzwischenlagen ab. Dabei ist mindestens eine Scheibe im Randbereich mit einer blickdichten Beschichtung versehen. Die bevorzugte Verwendung ist eine Sicherheitsverglasung in einem Fahrzeug mit ballistischer Schutzwirkung.

Eine weitere bevorzugte Verwendung der beschichteten Borosilikatglasscheibe ist die als Backofenscheibe, insbesondere bei einem Herd mit Pyrolysereinigung. Da es bei der Pyrolyse zu höheren Temperaturen kommt ist diese Ausführung aufgrund der höheren Temperaturbeständigkeit gegenüber den üblichen Ofenscheiben aus vorgespanntem Kalknatron-Glas vorteilhaft.

Eine weitere bevorzugte Verwendung sind beschichtete Brandschutzverglasungen mit Einzelscheiben oder Laminatverbunden aus Borosilikatglasscheiben.

In nachstehender Tabelle 1 wiedergegeben sind sechs beispielhafte Zusammensetzungen für die jeweilige Glaskomponente.

Zu erkennen ist insbesondere, dass die Erweichungstemperatur der Bespiele 1 bis 3 sowie 5 und 6 zwischen 600 und 645 °C liegt und dass bei den ersten drei Glaskomponenten der thermische Längenausdehnungskoeffizient bei etwa 5 liegt. Weiter aufgetragen ist die Verarbeitungstemperatur Va, bei der gilt lg (η) = 4.

Beispiel 4 ist eine Glassflusskomponente wie sie bevorzugt für Glaskeramiken verwendet wird. Diese hat eine höhere Erweichungstemperatur und einen Natriumoxidanteil von über 5 mol%.

Beispiele 5 und 6 haben einen etwas höheren Anteil an Bismutoxid, aber wiederum eine niedrigere Erweichungstemperatur als Beispiel 4, so dass sich diese auch für Glassubstrate eignen, die eine niedrigere Einbrenntemperatur benötigen.

**Tabelle 1 (Zusammensetzungsangaben in mol%)**

| | **Glas 1** | **Glas 2** | **Glas 3** | **Glas 4** | **Glas 5** | **Glas 6** |
|---|---|---|---|---|---|---|
| **SiO₂** | 62,9 | 62 | 61,3 | 66, 5 | 63,0 | 61,4 |
| **Al₂O₃** | 4,8 | 3,5 | 3,3 | 5,45 | 3,5 | 3,6 |
| **Bi₂O₃** | 1,45 | 1,4 | 1,6 | 2,4 | 2,2 | 2,2 |
| **B₂O₃** | 22,25 | 23 | 22,5 | 19,1 | 20,1 | 20,4 |
| **Li₂O** | 7,3 | 9,8 | 10,7 | | 10,5 | 10, 6 |
| **Na₂O** | 1,3 | 0,3 | | 6,55 | | |
| **K₂O** | | | 0,6 | | 0,7 | 0,7 |
| **ZrO₂** | | | | | | 1,1 |
| **∑ R₂ O / Al₂O₃** | 1,8 | 2, 9 | 3,2 | 1,2 | 3,2 | 3,1 |
| | | | | | | |
| **CTE** [20;300°C] * ppm/K | 4,7 | 4,8 | 5,1 | 5,4 | 5,3 | 5,3 |
| **Tg [°C,]** | 460 | 470 | 470 | 480 | 460 | 465 |
| **Ew [°C]** | 645 | 610 | 600 | 700 | 600 | 605 |
| **Va [°C]** | 955 | 860 | 840 | 1075 | 855 | 860 |
| | | | | | | |

Die in Tabelle 1 dargestellten Glasbeispiele 1 bis 4 wurden als feinvermahlenes Pulver mit Hilfe eines kommerziell erhältlichen Siebdrucköls unter Beimischung von 45 vol% eines Cu-Cr-Spinellpigments zu einer schwarzen auftragsfähigen Paste verarbeitet und mittels eines Siebdruckverfahrens auf ein Borosilikatglas mit einem thermischen Längenausdehnungskoeffizienten α von 3,3 * 10⁻⁶/K aufgebracht.

Der Einbrand der Schichten erfolgte in einem herkömmlichen Vorspannofen.

Tabelle 2 gibt die Einbrandbedingungen und die erhaltenen Schichtdicken sowie die Farbwerte im L*a*b*-Farbraum wieder. Die als Einbrandbedingung angegebenen Temperaturen wurden auf den Substraten selbst gemessen.

Zu erkennen ist, dass mit allen vier Glaszusammensetzungen schwarze Schichten mit hoher Brillanz hergestellt werden konnten.

Weiter haben die erfindungsgemäßen eingebrachten Schichten eine hohe mechanische Beständigkeit, sind also kratzbeständig und es traten weder nach dem Autoklavieren eines Verbunds noch nach dem Biegen einer Scheibe Farbveränderungen auf.

**Tabelle 2**

| | | **Bsp.1** | **Bsp.2** | **Bsp.3** | **Bsp.4** |
|---|---|---|---|---|---|
| **Einbrandbedingung** | | 670°C / 3 min | 670°C / 10 min | 670°C / 10 min | 700°C/ 10 min |
| **Schichtdicke [µm]** | | 7, 9 | 5, 9 | 5,2 | |
| **Farbwerte:** | **L*** | 25,75 | 26,55 | 25,5 | 25,7 |
| | **a*** | -0,03 | -0, 07 | -0,03 | -0,01 |
| | **b*** | -0,81 | -0, 97 | -0,87 | -0, 63 |

Die Kratzbeständigkeit wurde mithilfe eines Sclerometers (Elcometer 3092) bestimmt. Ein Sclerometer ist ein Härteprüfstab. Dieser prüft die Härte, indem er eine 1mm WC-Spitze mit einer vorbestimmten Andruckkraft über die Oberfläche bewegt.

Der Körper des Gerätes enthält einen mit einem Schraubverschluss versehenen Griffel mit Spitze, auf den eine Feder mit aufgedruckter Skala Druck ausübt.

Die Druckkraft der Feder wird mittels einer Arretierschraube eingestellt. Durch Zusammendrücken der Feder erhöht sich der Druck, mit dem die Spitze gegen die Oberfläche der Probe drückt. Durch geradlinige Ritzung bei zunehmendem Druck lässt sich der Punkt bestimmen, an dem die Spitze eine Spur hinterlässt bzw. die Beschichtung zerstört.

An den Ausführungsbeispielen wurde die Kratzfestigkeit bei 1000g, 1500g und 2000g Belastung überprüft. Die erfindungsgemäßen Beschichtungen zeigten nach diesen Prüfungen keine Ritzspur.

An den Ausführungsbeispielen wurde die chemische Beständigkeit über einen Einwirkzeitraum von 24h bei Raumtemperatur mit unterschiedlichen Substanzen überprüft: Die Prüfsubstanzen Zitronensäure (10%), Essigsäure (5%) und Ethanol wurden auf den dekorierten Prüfkörper aufgetragen und nach der Einwirkdauer von 24h mit Wasser gereinigt. Das Reinigungsverhalten wurde zusätzlich durch Verwendung von handelsüblichen Reinigungsmitteln wie Sidolin® Citrus und einem alkalischen Reiniger (Bref®)überprüft.
Visuell wurde festgestellt, dass nach der Prüfung mit o.g. Substanzen keine Beschädigungen an der dekorierten Schicht, Flecken oder Reinigungsspuren zu detektieren sind.

In einem weiteren Ausführungsbeispiel 5 wurde der Glasfluss gemäß Beispiel 1 unter Verwendung von 45 % einer Mischung aus kommerziell erhältlichen Pigmenten von schwarz, weiß und blau auf Basis von Spinellen bzw. Rutil (TiO₂) und Siebdrucköl zu einer farbig-grauen Farbpaste verarbeitet.

In einem weiteren Ausführungsbeispiel 6 wurde der Glasfluss gemäß Beispiel 1 unter Verwendung von 45 % eines kommerziell erhältlichen Weiß-Pigments auf Basis von Rutil (TiO₂) und Siebdrucköl zu einer weißen Farbpaste verarbeitet.

Der Auftrag erfolgte in herkömmlicher Siebdrucktechnik auf ein flaches Glassubstrat vom Typ Borosilikat der SCHOTT AG. Der Einbrand fand ebenfalls in einem handelsüblichen Ofen statt:

| **Glasnr.** | **Bsp.1** |
|---|---|
| **Einbrandbedingung** | 690°C / 15' |

| **Farbwerte:** | |
|---|---|
| **L*** | 88,2 |
| **a*** | -1,7 |
| **b*** | -1,5 |

In einem weiteren Ausführungsbeispiel 7 wurde eine schwarze Farbe auf Basis der Glaszusammensetzung Nr. 4 auf ein bereits keramisiertes Substrat einer transparenten Glaskeramikscheibe mit Nullausdehnung - ROBAX® der SCHOTT AG, aufgebracht.

Der Einbrand der Farbe erfolgte bei ca. 720°C für 10 Minuten in einem herkömmlichen Ofen zu einer schwarzen, blickdichten Dekorierung mit einer Schichtdicke von 5,2 µm.

In einem weiteren Ausführungsbeispiel 8 wurde der Glasfluss mit einer Zusammensetzung gemäß Glas 2 zu einem Glaspulver mit einer mittleren Korngröße von 1,8 µm vermahlen.

Es wurden 85 Gew.% des erhaltenen Glaspulvers mit 15 Gew.% eines handelsüblichen Weißpigmentes bestehend aus Rutil gemischt und mit Zusatz von organischem Anpastmittel auf Ölbasis zu einer Paste verarbeitet. Das Anpastverhältnis betrug 10 Gewichtsanteile Pulver zu 6,5 Gewichtsanteile Öl.

Die Paste wurde in üblicher Weise über einen Dreiwalzenstuhl homogenisiert. Mit der erhaltenen Paste (Viskosität von 2,5 Pa·s bei einer Schergeschwindigkeit von 200 s⁻¹ und Temperatur 23°C) wurde ein Glassubstrat aus einem Borosilikatglas des Typs FIOLAX®, Glas-Nr. 8412, der Firma SCHOTT AG mit einer thermischen Ausdehnung von 4,9 x 10⁻⁶ /K im Temperaturbereich 20 - 300°C beschichtet.

Dieser Glastyp wird vorzugsweise für pharmazeutische Verpackungsmittel eingesetzt. Die Beschichtung erfolgte im Siebdruckverfahren. Das beschichtete Glassubstrat wurde in einem Ofen eingebrannt. Bei dem Einbrand wurden die getrockneten, bedruckten Glassubstrate in einen auf 400°C vorgeheizten Ofen eingelegt. Mit einer Heizrate von 15°C/min wurden die Glassubstrate auf 650°C, Haltezeit 5 min erhitzt. Dann wurde der Ofen mit geöffneter Tür schnell abgekühlt.

Nach dem Einbrand wurde eine mittlere Schichtdicke von 10 µm gemessen. Die Begutachtung der Beschichtung mit bloßem Auge und unter dem Lichtmikroskop ergab keine Anzeichen von Rissen oder Abplatzungen. Die Abriebfestigkeit der Beschichtung wurde im Kratztest mit einem Metalllineal bewertet. Das Metalllineal wurde mit der Kante über die bedruckte Fläche gekratzt und es zeigte sich, dass keine Schichtbestandteile abgeschabt wurden.
Glanz und Rauhigkeit der Beschichtung entsprachen mithin den Anforderungen.

Die chemische Beständigkeit wurde gemäß den Anforderungen, die an pharmazeutische Verpackungsmittel aus Glas gestellt werden, geprüft.

In Anlehnung an die DIN ISO 4794 wurde die Beständigkeit gegen Salzsäure (1 Stunde in Salzsäure C = 2 mol/l bei 23°C) geprüft. Die Bewertung der Farbveränderung erfolgte gemäß der ASTMC 724-91 in Klassen zwischen 1 und 7. Dabei steht 1 für "kein sichtbaren Angriff" und 7 für "komplette Entfernung der Farbe". Die Prüfung ergab eine Einstufung in Klasse 1, d.h. kein sichtbarer Angriff.

Gemäß der ASTMC 724-91 wurde die chemische Beständigkeit gegenüber 10%iger Zitronensäure (15 min bei 20°C) geprüft. Es ergab sich auch hier die Einstufung in Klasse 1, d.h. kein sichtbarer Angriff.

In Anlehnung an die EP 7.8, 2013, wurde die hydrolytische Beständigkeit unter den Bedingungen der Autoklavierung für 1 Stunde bei 121°C mit anschließender visueller Begutachtung der Farbveränderung nach ASTMC 724-91 gewertet. Es ergab sich die Einstufung in Klasse 1 "kein Angriff erkennbar".

Die Prüfungen zeigten also die hervorragende chemische Beständigkeit der erfindungsgemäßen Beschichtungen für Anwendungen als pharmazeutische Verpackungsmittel.

### Beschreibung der Zeichnungen

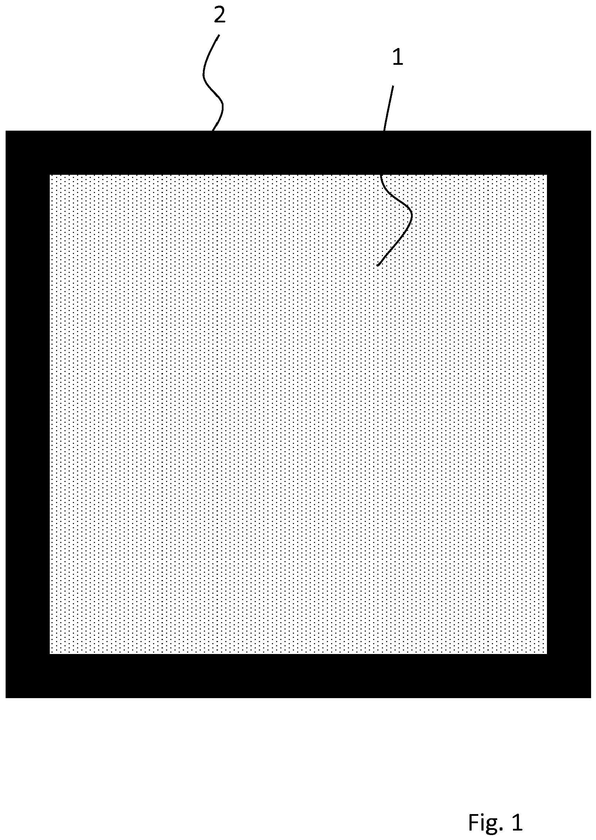

Fig. 1 zeigt schematisch ein Glassubstrat 1 aus einem Borosilikatglas, welches im Randbereich mit einer Beschichtung 2 versehen ist, welche optisch den Eindruck eines Rahmens erweckt.

Es versteht sich, dass die erfindungsgemäße Beschichtung auch beispielsweise zum Auftragen von Skalierungen, als Feldbegrenzung eines Kochfelds sowie zum Aufbringen von Beschriftungen geeignet ist.

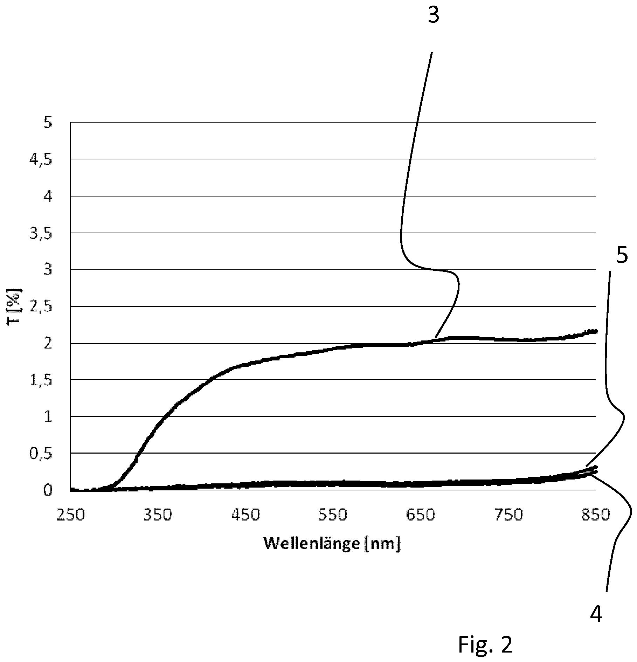

Fig. 2 zeigt das Transmissionsverhalten verschiedener Beschichtungen.

Auf der x-Achse ist die Wellenlänge in µm und auf der y-Achse die Transmission in % aufgetragen.

Kurve 3 zeigt den Transmissionsverlauf eines kommerziell erhältlichen Einschicht-Emailles. Dabei handelt es sich um eine Glasur bestehend aus einer Glasfritte mit hohem Bismutoxid-Anteil und Pigmenten, die Cr- und Cu-Komponenten enthalten.

Zu erkennen ist, dass ab einem Wellenlängenbereich von über 450 µm die Transmission bei über 1 % liegt und bis auf 2 % ansteigt. Die Beschichtung ist mithin nicht blickdicht. Kurve 4 zeigt die aus Beispiel 2 und Kurve 5 die aus Beispiel 3 der Tabelle 1 hergestellte und eingebrannte Beschichtung.

Zu erkennen ist, dass bei beiden Beschichtungen die Transmission über den gesamten Wellenlängenbereich des sichtbaren Lichtes bei deutlich unter 0,5 % liegt.

Die Beschichtung ist mithin blickdicht.

Durch die Erfindung konnte eine gut auftragbare, preiswerte und blickdichte Emaille-Beschichtung für Gläser mit niedrigen thermischen Ausdehnungskoeffizienten bereitgestellt werden.

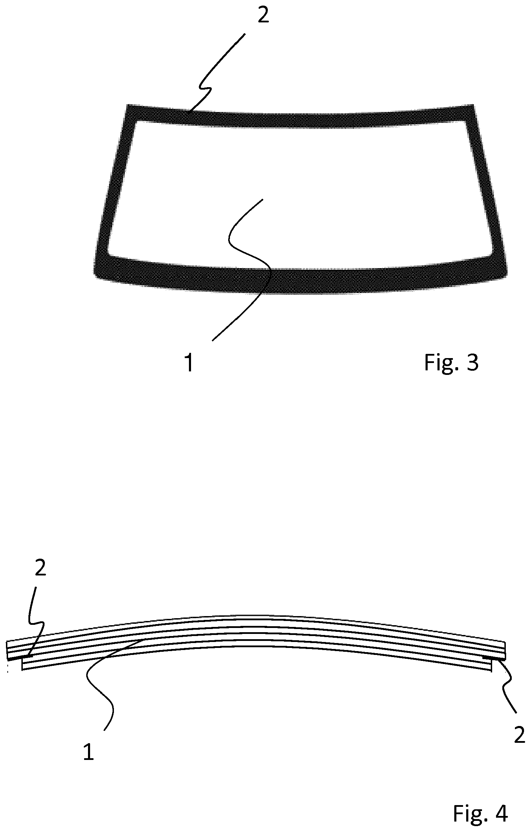

Fig. 3 zeigt eine schematische Ansicht einer schussfesten Sicherheitsverglasung. Diese umfasst ein Substrat 1, welches aus einer Mehrzahl von Glas- und/oder Glaskeramikschichten sowie Polymerschichten besteht, welche zu einem Verbund laminiert sind.

Randseitig ist die Scheibe mit einer blickdichten Beschichtung 2 versehen, welche einen Rahmen bildet, der beispielsweise Klebnähte überdeckt.

Fig. 4 zeigt eine schematische Schnittansicht der in Fig. 3 dargestellten Scheibe. Zu erkennen ist, dass die äußeren Schichten des Verbunds überstehen und dass die blockdichte Beschichtung 2 teilweise zwischen den Scheiben des Verbunds und teilweise auf der Unterseite des Verbunds angeordnet ist.

Das erfindungsgemäße Beschichtungsmaterial hat eine hohe Kratzbeständigkeit und verfärbt sich beim Autoklavieren des Verbunds nicht.

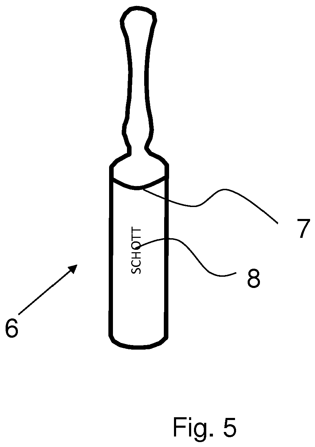

Fig. 5 zeigt ein Pharmaverpackungsmittel 6 in Form einer Ampulle aus Glas. Die erfindungsgemäße Beschichtung kann für dieses beispielsweise zum Aufbringen der Markierung 7 oder einer Beschriftung 8 verwendet werden.

## Patentansprüche

1. Mit einer Beschichtung versehenes Glas- oder Glaskeramiksubstrat mit einem thermischen Längenausdehnungskoeffizienten α bei 20 °C bis 300 °C von bis zu 5,5 * 10⁻⁶/K, wobei die Beschichtung mittels eines Glasflussmaterials aufgebracht ist, welches zumindest ein Pigment sowie eine Glaskomponente umfasst, wobei die Glaskomponente beinhaltet:
| | |
|---|---|
| SiO₂ | 58 - 65 mol%, |
| Al₂O₃ | 2,5 - 6 mol%, |
| Bi₂O₃ | 0,5 - 2 mol%, |
| B₂O₃ | 18 - 25 mol%, |
mit mindestens 2,5 mol% von mindestens einem Oxid der Gruppe Li₂O, Na₂O und K₂O,
wobei das Verhältnis von Alkalioxiden zu Aluminiumoxid E R₂O/Al₂O₃ kleiner als 6 ist,
wobei die Beschichtung blickdicht ausgebildet ist, und wobei die Glaskomponente eine Erweichungstemperatur Ew von weniger als 680 °C aufweist.

2. Mit einer Beschichtung versehenes Glas- oder Glaskeramiksubstrat nach Anspruch 1, wobei das Verhältnis von Alkalioxiden zu Aluminiumoxid E R₂O/Al₂O₃ größer als 1 und kleiner als 4,5 ist.

3. Mit einer Beschichtung versehenes Glas- oder Glaskeramiksubstrat nach einem der vorstehenden Ansprüche, wobei die Glaskomponente beinhaltet:
| | |
|---|---|
| Li₂O | 0 - 15 mol%, |
| Na₂O | 0 - 12 mol%, |
| K₂O | 0 - 4 Mol %. |

4. Mit einer Beschichtung versehenes Glas- oder Glaskeramiksubstrat nach einem der vorstehenden Ansprüche, **dadurch gekennzeichnet, dass** die Glaskomponente weiter beinhaltet: ZrO₂ und/oder TiO₂ bis zu 2 mol% und/oder Erdalkalioxide, insbesondere MgO, CaO, BaO oder SrO, und/oder ZnO bis zu jeweils 3 mol%.

5. Mit einer Beschichtung versehenes Glas- oder Glaskeramiksubstrat nach einem der vorstehenden Ansprüche, **dadurch gekennzeichnet, dass** das Glasflussmaterial als Paste mit einer gemahlenen Glaskomponente ausgebildet ist, wobei die gemahlene Glaskomponente eine Partikelgrößenverteilung mit d₅₀ zwischen 1,2 und 2,5 µm aufweist.

6. Mit einer Beschichtung versehenes Glas- oder Glaskeramiksubstrat nach einem der vorstehenden Ansprüche, **dadurch gekennzeichnet, dass** die Beschichtung eine Dicke von mehr als 4 µm aufweist.

7. Glasflussmaterial zum Aufbringen einer blickdichten Beschichtung mit zumindest einem Pigment sowie einer Glaskomponente, wobei die Glaskomponente umfasst:
| | |
|---|---|
| SiO₂ | 58 - 65 mol%, |
| Al₂O₃ | 2,5 - 6 mol%, |
| Bi₂O₃ | 0,5 - 2 mol%, |
| B₂O₃ | 18 - 25 mol%, |
mit mindestens 2,5 mol% von mindestens einem Oxid der Gruppe Li₂O, Na20 und K₂O,
wobei das Verhältnis von Alkalioxiden zu Aluminiumoxid E R₂O/Al₂O₃ kleiner als 6 ist,
wobei das Glasflussmaterial als Paste mit einer gemahlenen Glaskomponente ausgebildet ist, wobei die gemahlene Glaskomponente eine Partikelgrößenverteilung mit d50 zwischen 1,2 und 2,5 µm aufweist, und wobei die Glaskomponente eine Erweichungstemperatur Ew von weniger als 680 °C aufweist.

8. Verfahren zur Beschichtung eines Glas- oder Glaskeramiksubstrats, wobei ein Glasflussmaterial nach dem vorstehenden Anspruch verwendet wird, welches bei einer Temperatur von weniger als 750 °C, bevorzugt von weniger als 700°C eingebrannt wird.

9. Verfahren zur Beschichtung eines Glas- oder Glaskeramiksubstrats nach dem vorstehenden Anspruch, **dadurch gekennzeichnet, dass** das Glasflussmaterial mittels eines Druckverfahrens aufgebracht wird.

10. Verfahren zur Beschichtung eines Glas- oder Glaskeramiksubstrats nach dem vorstehenden Anspruch, **dadurch gekennzeichnet, dass** das Glasflussmaterial während eines Vorspannprozesses eingebrannt wird.

11. Verfahren zur Beschichtung eines Glas- oder Glaskeramiksubstrats nach dem vorstehenden Anspruch, **dadurch gekennzeichnet, dass** das Substrat in einem Stapel zusammen mit zumindest einem weiteren Glas-oder Glaskeramiksubstrat gebogen wird, vorzugsweise bei einer Temperatur von weniger als 650 °C, besonders bevorzugt weniger als 630 °C.

12. Panzerglaslaminatverbund, Kaminofenscheibe, Pyrolysebackofenscheibe, Brandschutzverglasung, Lampe oder Pharmapackmittel, umfassend ein mit einer glasflussbasierten Beschichtung versehenes Glas- oder Glaskeramiksubstrat nach einem der vorstehenden Ansprüche 1 bis 6.

## Claims

1. A glass or glass ceramic substrate provided with a coating, having a thermal expansion coefficient α at 20 °C to 300 °C of up to 5.5 * 10⁻⁶/K, wherein the coating is applied by means of a glass flux material, which comprises at least one pigment and one glass component, wherein the glass component contains:
| | |
|---|---|
| SiO₂ | 58-65 mol%, |
| Al₂O₃ | 2.5-6 mol%, |
| Bi₂O₃ | 0.5-2 mol%, |
| B₂O₃ | 18-25 mol%, |
with at least 2.5 mol% of at least one oxide from the group Li₂O, Na₂O and K₂O,
wherein the ratio of alkali metal oxides to aluminium oxide ∑ R₂O/Al₂O₃ is less than 6,
wherein the coating is opaque, and wherein the glass component has a softening temperature Ew of less than 680 °C.

2. A glass or glass ceramic substrate provided with a coating according to claim 1, wherein the ratio of alkali metal oxides to aluminium oxide ∑ R₂O/Al₂O₃ is greater than 1 and less than 4.5.

3. A glass or glass ceramic substrate provided with a coating according to one of the preceding claims, wherein the glass component contains:
| | |
|---|---|
| Li₂O | 0-15 mol%, |
| Na₂O | 0-12 mol%, |
| K₂O | 0-4 mol %. |

4. A glass or glass ceramic substrate provided with a coating according to one of the preceding claims, **characterised in that** the glass component further contains: ZrO₂ and/or TiO₂ up to 2 mol% and/or alkaline earth oxides, in particular MgO, CaO, BaO or SrO, and/or ZnO up to 3 mol%.

5. A glass or glass ceramic substrate provided with a coating according to one of the preceding claims, **characterised in that** the glass flux material is a paste having a ground glass component, wherein the ground glass component has a particle size distribution with d₅₀ between 1.2 and 2.5 µm.

6. A glass or glass ceramic substrate provided with a coating according to one of the preceding claims, **characterised in that** the coating has a thickness of greater than 4 µm.

7. Glass flux material for applying an opaque coating comprising at least one pigment and one glass component, wherein the glass component comprises:
| | |
|---|---|
| SiO₂ | 58-65 mol%, |
| Al₂O₃ | 2.5-6 mol%, |
| Bi₂O₃ | 0.5-2 mol%, |
| B₂O₃ | 18-25 mol%, |
with at least 2.5 mol% of at least one oxide from the group Li₂O, Na₂O and K₂O,
wherein the ratio of alkali metal oxides to aluminium oxide ∑ R₂O/Al₂O₃ is less than 6,
wherein the glass flux material is a paste with a ground glass component, wherein the ground glass component has a particle size distribution with d50 between 1.2 and 2.5 µm, and wherein the glass component has a softening temperature Ew of less than 680 °C.

8. Method for coating a glass or glass ceramic substrate, wherein a glass flux material according to the preceding claim is used, which is baked at a temperature of less than 750 °C, preferably less than 700 °C.

9. Method for coating a glass or glass ceramic substrate according to the preceding claims, **characterised in that** the glass flux material is applied by means of a printing process.

10. Method for coating a glass or glass ceramic substrate according to the preceding claims, **characterised in that** the glass flux material is baked during a pretensioning process.

11. Method for coating a glass or glass ceramic substrate according to the preceding claims, **characterised in that** the substrate is bent into a stack together with at least one further glass or glass ceramic substrate, preferably at a temperature of less than 650 °C, particularly preferably at a temperature of less than 630 °C.

12. Armoured-glass laminate composite, stove panel, pyrolysis baking oven panel, fire protection glazing, lamps or pharmaceutical packaging comprising a glass or glass ceramic substrate with a glass-flux based layer according to one of the preceding claims 1 to 6.

## Revendications

1. Substrat en verre ou en vitrocéramique muni d'un revêtement ayant un coefficient de dilatation thermique linéaire α à 20 °C jusqu'à 300 °C allant jusqu'à 5,5 * 10⁻⁶/K, le revêtement étant appliqué au moyen d'un matériau de vitrification qui comprend au moins un pigment ainsi qu'un composant en verre, le composant en verre comprenant :
| | |
|---|---|
| SiO₂ | 58 à 65 % en moles, |
| Al₂O₃ | 2,5 à 6 % en moles, |
| Bi₂O₃ | 0,5 à 2 % en moles, |
| B₂O₃ | 18 à 25 % en moles, |
avec au moins 2,5 % en moles d'au moins un oxyde du groupe Li₂O, Na₂O et K₂O,
le rapport oxydes alcalins/oxyde d'aluminium ∑ R₂O/Al₂O₃ étant inférieur à 6,
le revêtement étant conçu pour être opaque et le composant en verre présentant une température de ramollissement Ew inférieure à 680 °C.

2. Substrat en verre ou en vitrocéramique muni d'un revêtement selon la revendication 1, le rapport oxydes alcalins/oxyde d'aluminium ∑ R₂O/Al₂O₃ étant supérieur à 1 et inférieur à 4,5.

3. Substrat en verre ou en vitrocéramique muni d'un revêtement selon l'une des revendications précédentes, le composant en verre comprenant :
| | |
|---|---|
| Li₂O | 0 à 15 % en moles, |
| Na₂O | 0 à 12 % en moles, |
| K₂O | 0 à 4 % en moles. |

4. Substrat en verre ou en vitrocéramique muni d'un revêtement selon l'une des revendications précédentes, **caractérisé en ce que** le composant en verre comprend en outre : du ZrO₂ et/ou du TiO₂ jusqu'à 2 % en moles et/ou des oxydes alcalino-terreux, en particulier MgO, CaO, BaO ou SrO et/ou du ZnO jusqu'à respectivement 3 % en moles.

5. Substrate en verre ou en vitrocéramique muni d'un revêtement selon l'une des revendications précédentes, **caractérisé en ce que** le matériau de vitrification est conçu sous forme de pâte avec un composant en verre broyé, le composant en verre broyé présentant une distribution granulométrique avec une valeur d₅₀ comprise entre 1,2 et 2,5 µm.

6. Substrat en verre ou en vitrocéramique muni d'un revêtement selon l'une des revendications précédentes, **caractérisé en ce que** le revêtement présente une épaisseur de plus de 4 µm.

7. Matériau de vitrification pour appliquer un revêtement opaque comprenant au moins un pigment ainsi qu'un composant en verre, le composant en verre comprenant :
| | |
|---|---|
| SiO₂ | 58 à 65 % en moles, |
| Al₂O₃ | 2,5 à 6 % en moles, |
| Bi₂O₃ | 0,5 à 2 % en moles, |
| B₂O₃ | 18 à 25 % en moles, |
avec au moins 2,5 % en moles d'au moins un oxyde du groupe Li₂O, Na₂O et K₂O,
le rapport oxydes alcalins/oxyde d'aluminium ∑ R₂O/Al₂O₃ étant inférieur à 6,
le matériau de vitrification étant conçu sous forme de pâte avec un composant en verre broyé, le composant en verre broyé présentant une distribution granulométrique avec une valeur d50 comprise entre 1,2 et 2,5 µm et le composant en verre présentant une température de ramollissement Ew inférieure à 680 °C.

8. Procédé pour recouvrir un substrat en verre ou en vitrocéramique, un matériau de vitrification étant utilisé selon la revendication précédente, le matériau étant cuit à une température inférieure à 750 °C, de préférence inférieure à 700 °C.

9. Procédé pour recouvrir un substrat en verre ou en vitrocéramique selon la revendication précédente, **caractérisé en ce que** le matériau de vitrification est appliqué au moyen d'un procédé sous pression.

10. Procédé pour recouvrir un substrat en verre ou en vitrocéramique selon la revendication précédente, **caractérisé en ce que** le matériau de vitrification est cuit au cours d'un processus de trempe.

11. Procédé pour recouvrir un substrat en verre ou en vitrocéramique selon la revendication précédente, **caractérisé en ce que** le substrat est plié dans une pile conjointement avec au moins un autre substrat en verre ou en vitrocéramique, de préférence à une température inférieure à 650 °C, de manière particulièrement préférée inférieure à 630 °C.

12. Composite stratifié pour verre blindé, vitre de poêle, vitre de four à pyrolyse, vitrage pare-feu, lampe ou emballage pharmaceutique comprenant un substrat en verre ou en vitrocéramique muni d'un revêtement basé sur une vitrification selon l'une des revendications 1 à 6 précédentes.
